# EUROPÄISCHE PATENTSCHRIFT

(11) **EP 0 440 914 B1**
(45) Veröffentlichungstag und Bekanntmachung des Hinweises auf die Patenterteilung: **18.10.1995**
(21) Anmeldenummer: 90123252.0
(22) Anmeldetag: 04.12.1990
(51) Int. Cl.: H04L 9/32

(54) **Verfahren zum Zuordnen von Nutzdaten zu einem bestimmten Absender**
Method for allocating information data to a certain sender
Procédé d'allocation de données d'information à un expéditeur particulier

(30) Priorität: 05.02.1990 DE 4003386
(43) Veröffentlichungstag der Anmeldung: 14.08.1991
(73) Patentinhaber: SIEMENS AKTIENGESELLSCHAFT, 80333 München (DE)
(72) Erfinder: Vollert, Emeran, Dipl.Ing., W-8152, Grosshöhenrain (DE); Wildgrube, Eberhard, Dipl.Phys., W-8000, München 90 (DE)

(56) Entgegenhaltungen:
- GB-A- 2 020 513
- COMMUNICATIONS OF THE ASSOCIATION FOR COMPUTING MACHINERY. Bd. 21, Nr. 12,Dezember 1978, NEW YORK US Seiten 993 - 999; R.M.NEEDHAM ET AL: 'UsingEncryption for Authentication in Large Networks of Computers'
- PROCEEDINGS OF THE 1979 NATIONAL COMPUTER CONFERENCE, 4-7 June 1979, Pages 831-837, New York, US; C.S. KLINE & G.J.POPEK:" Public Key vs. Conventional Key Encryption"
- NACHRICHTEN TECHNIK ELEKTRONIK. Bd. 39, Nr. 12, Dezember 1989, BERLIN DD Seiten456 - 458; N.THÖRY: 'Digitale Unterschrift Identifikations- undAuthentifikationsmittel zukünftiger Telekommunikationsdienste'

## Beschreibung

Die Erfindung betrifft ein Verfahren zum eindeutigen Zuordnen von zwischen einer ersten und einer zweiten Kommunikationsendstelle übertragenen Nutzdaten zu einem bestimmten Absender, bei dem zusätzlich zu den Nutzdaten ein Hash-Ergebnis gebildet wird, welches einem Kryptoalgorithmus unterworfen wird, bei dem die Nutzdaten in der sendenden Kommunikationsstelle mittels eines Hash-Verfahrens komprimiert werden und anschließend an einen zentralen Server übermittelt werden, bei dem nach erfolgter Authentifizierung des Benutzers das Hash-Ergebnis zusammen mit dem privaten Schlüssel des Benutzers mittels eines Kryptoalgorithmus zu einer Signatur verarbeitet wird, bei dem die Nutzdaten im Klartext zusammen mit der Signatur und dem öffentlichen Schlüssel zu einer zweiten Kommunikationsendstelle übertragen werden, und bei dem in der zweiten Kommunikationsendstelle die im Klartext empfangenen Nutzdaten einem Hash-Verfahren und die Signatur einem zweiten gegenüber dem ersten inversen Kryptoalgorithmus unterworfen werden, wobei bei Übereinstimmung der beiden Resultate auf eine gültige Zuordnung der Nutzdaten zu einem bestimmten Benutzer erkannt wird.

Ein derartiges Verfahren ist z.B. aus Nachrichtentechnik Elektronik, Bd. 39, Nr. 12, Dezember 1989, Berlin, DD, Seiten 456 bis 458: N-Thöry: "Digitale Unterschrift - Identifikations- und Authentifikationsmittel zukünftiger Telekommunikationsdienste" bekannt. Bei diesem Verfahren erfolgt die Transformation des Hash-Ergebnisses mittels des Kryptoalgorithmus erst nach erfolgter Authentifizierung des Benutzers mit Hilfe des privaten Schlüssel des Benutzers, wodurch Manipulationen auf dem Übertragungsweg der Nutzdaten verhindert werden.

Jedoch besteht die Gefahr, daß mit Viren verseuchte Dokumente in den Server-Prozessor-Bereich hineingelangen.

Aufgabe der vorliegenden Erfindung ist es, ein Verfahren der eingangs genannten Art anzugeben, bei welchem verhindert wird, daß falsche Dokumente in den Prozessor-Bereich gelangen können.

Diese Aufgabe wird für ein Verfahren der eingangs genannten Art dadurch gelöst, daß die Benutzer-Authentifizierung mittels eines dem Kryptoalgorithmus-Rechners vorgeschalteten, im Übertragungsweg liegenden Vorrechners in Verbindung mit einer elektronischen Filtereinrichtung erfolgt, wobei der Vorrechner über eine separate Steuerleitung mit dem Kryptoalgorithmus-Rechner verbunden ist.

Hierdurch ist ein wirkungsvoller Zugangs- und Zugriffsschutz für den Server mit einer einfachen elektronischen Filterschaltung gewährleistet, welche nur Daten in Form eines Hash-Wertes durchläßt. Mit "Viren" und ähnlichem verseuchte Dokumente können also erst gar nicht in den Server-Prozessor-Bereich hineingelangen. Dabei erfolgt die Koordination zwischen dem Vorrechner und dem Kryptoalgorithmus-Rechner aus Sicherheitsgründen über eine eigene Steuerleitung.

Eine vorteilhafte Ausgestaltung des erfindungsgemäßen Verfahrens ist dadurch gekennzeichnet, daß die Signatur im zentralen Server hinterlegt wird und zusammen mit dem öffentlichen Schlüssel des Benutzers gleichzeitig zur Überprüfung an den Benutzer übertragen wird, wobei die Hinterlegung der Signatur im zentralen Server mindestens durch Dopplung des Hinterlegungsspeichers in getrennten Gebäuden erfolgt.

Dadurch ist ein gewisser Schutz der hinterlegten Daten vor kleineren Katastrophen gegeben.

Aus proceedings of the 1979 national computer conference, 4/7 Juni 1979, Seiten 831 bis 837, New York, US; C.S. Kline & G.J. Popec "public key vs. convential key and cribtion" ist ein zentraler Server bekannt, welcher zur Signaturverarbeitung dient und welcher den privaten Schlüssel verwaltet. Jedoch erfolgt hier keine Hinterlegung der Signatur durch Dopplung des Hinterlegungsspeichers.

Eine weitere vorteilhafte Ausgestaltung des Verfahrens gemäß der Erfindung ist dadurch gekennzeichnet, daß aufgrund der Dopplung der Signatur-Hinterlegung die Hinterlegung von unterschiedlichen Körperschaften langfristig und gegenseitig kontrolierbar verwaltet wird. Dadurch wird eine etwa mögliche Einflußnahme bzw. Manipulation durch eine einzelne Instanz verhindert.

Zur Erleichterung eventueller Beweisführungen ist es zweckmäßig, daß die Hinterlegung sofort nach der Erstellung der Signatur und in chronologischer Reihenfolge erfolgt.

Eine andere zweckmäßige Ausgestaltung des erfindungsgemäßen Verfahrens ist dadurch gekennzeichent, daß die privaten sowie die öffentlichen Schlüssel im gesicherten Kryptoalogrithmus-Rechner erzeugt und verwaltet werden, wobei die privaten Schlüssel unauslesbar gespeichert sind und die Verwaltungseinrichtung für die Schlüssel eine ausschließliche Schnittstelle zum eigentlichen Kryptoalogrithmus-Rechner nutzt.

Private Schlüssel müssen immer geschützt sein, auch bei der Verarbeitung im Kryptoalgorithmus-Rechner. Solange dieser Schutz z. B. aus technologischen Gründen, wie oben ausgeführt wurde, bei Teilnehmer nicht gewährleistet werden kann, ist es vorteilhaft, die Verarbeitung im ohnehin zu schützenden zentralen Schlüsselgenerierungsbereich stattfinden zu lassen.

Das erfindungsgemäße Verfahren wird im folgenden anhand der Zeichnungen näher beschrieben.

Es zeigen:
- FIG 1: den schematischen Ablauf des erfindungsgemäßen Verfahrens und
- FIG 2: den Aufbau eines zentralen Servers mit einem Kryptoalgorithmus-Rechner zur Durchführung des erfindungsgemäßen Verfahrens.

Mit 15 ist der PC einer ersten sendenden Kommunikationsendstelle bezeichnet. In diesen PC wird das Nutzdaten-Dokument 1 erstellt. Dieses Dokument 1 wird einem Hash-Rechner 16 zugeführt, an dessen Ausgang das Hash-Ergebnis 3 anliegt. Dieses Hashergebnis 3 wird zum zentralen Server 2 geschickt. Dort wird aus dem Hashergebnis 3 in Verbindung mit dem privaten Schlüssel 9a des Benutzers im Kryptoalogrithmus-Rechner 5 eine Signatur 17 gebildet. Die Signatur 17 wird vom Server 2 mit dem öffentlichen Schlüssel 9b und weiteren Daten zu einem Zertifikat 10, das daher im wesentlichen aus der Signatur und dem öffentlichen Schlüssel besteht, ergänzt. Diese Zertifikat 10 wird in einem Hinterlegungsspeicher 11 abgelegt und gleichzeitig in einem zweiten Dopplungsspeicher 12 hinterlegt.

Das Zertifikat 10 wird zur Überprüfung an die sendende erste Kommunikationsendstelle gesandt, wo es in einer Überprüfungsanordnung 18 auf seine Richtigkeit hin überprüft wird. Bei einem positiven Überprüfungsergebnis versendet der Benutzer dann das Dokument zusammen mit dem Zertifikat an die entsprechenden Empfänger.

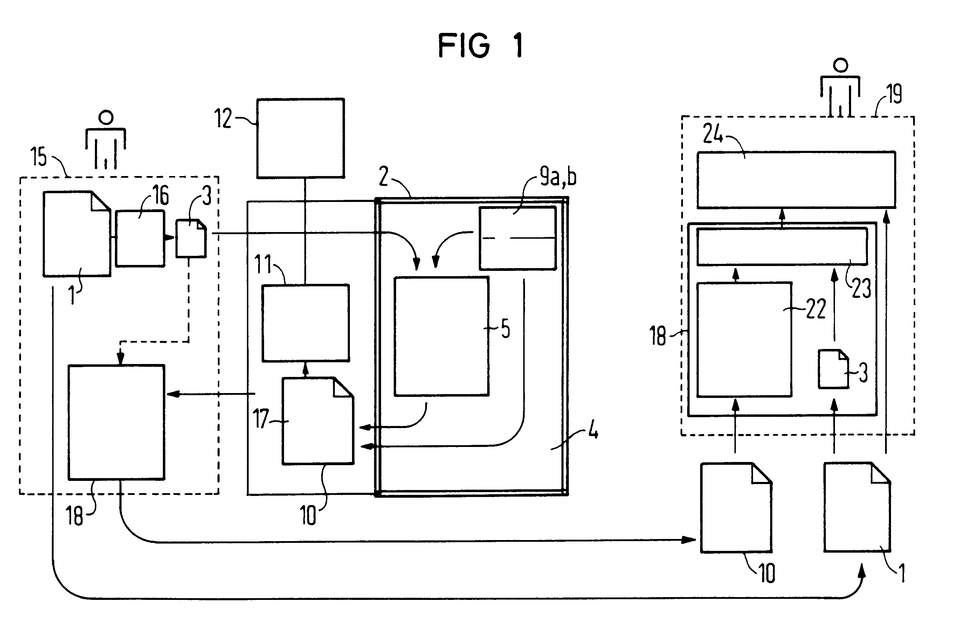

In der Figur 1 ist der Empfänger die zweite Kommunikationsendstelle 19. Diese zweite Kommunikationsendstelle verfügt wie die erste Kommunikationsendstelle über eine Überprüfungsanordnung 18, die im folgenden näher erläutert werden soll. In der Überprüfungsanordnung 18 wird das im Klartext empfangene Dokument 1 dem gleichen Hash-Verfahren wie in der ersten Kommunikationsendstelle unterworfen. Das Ergebnis dieses Verfahrens ist das Hashergebnis 3. Gleichzeitig wird das Zertifikat 10 in einem Rechner 22 einem zweiten gegenüber dem ersten im zentralen Server 2 angewendeten Kryptoalgorithmus inversen Kryptoalogrithmus unterworfen. Beide Ergebnisse werden in einer Vergleichsschaltung 23 miteinander verglichen und bei Übereinstimmung der beiden Ergebnisse erfolgt in der Ausgabe 24 eine gültige Anzeige.

In der Überprüfungsanordnung 18 der ersten Kommunikationsendstelle erfolgt kein zweiter Hash-Vorgang wie in der Überprüfungsanorndung der zweiten Kommunikationsendstelle. Vielmehr wird hier das schon vorhandene Hash-Ergebnis 3 zur Überprüfung benutzt.

Bei dem vorliegenden erfindungsgemäßen Verfahren wird also das Hashergebnis von zu übertragenden Nutzdaten an einen zentralen Server 2 geschickt. Da durch den Hash-Vorgang die Nutzdaten auf eine bestimmte Länge komprimiert werden, ergibt sich eine kürzere Übertragungszeit. Erst im zentralen Server wird das Hash-Ergebnis mittels des im zentralen Servers abgespeicherten und verwalteten privaten Schlüssels des Benutzers zu einer einmaligen Signatur 17 transformiert.

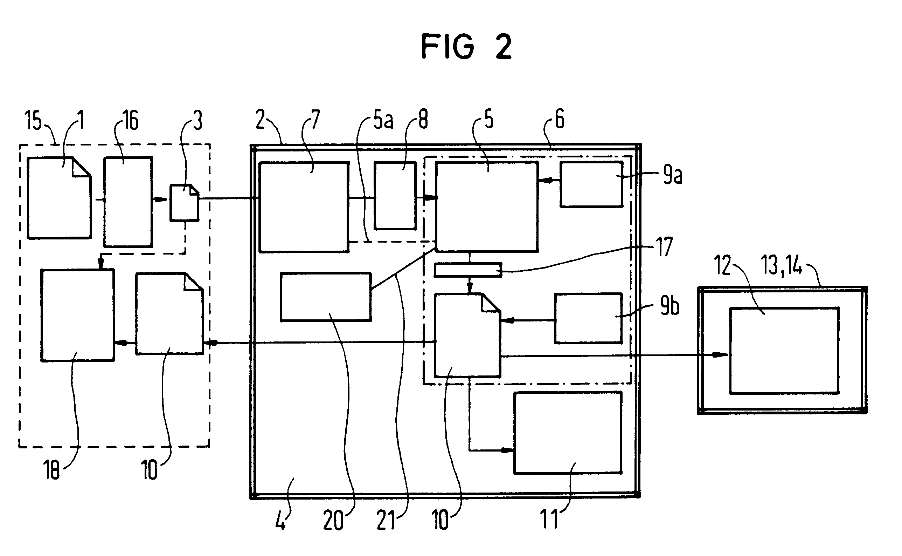

Figur 2 zeigt detailierter den Aufbau des zentralen Servers 2. Im zentralen Server 2 sind dem Kryptoalgorithmus-Rechner 5 ein Vorrechner 7 und eine elektronische Filtereinrichtung 8 vorgeschaltet. Diese dienen zur Authentifizierung des Benutzers nach Erhalt des Hash-Ergebnisses. Die elektronische Filtereinrichtung 8 ist so aufgebaut, daß von ihr nur Daten in Form eines Hashwertes durchgelassen werden. Damit ist ein wirkungsvoller Zugang- und Zugriffsschutz für den Server gewährleistet. Aus Sicherheitsgründen erfolgt die Koordination zwischen dem Vorrechner und dem Kryptoalogrithmus-Rechner über eine eigene Steuerleitung 5a.

Der gesamte zentrale Server 2 befindet sich in einem geschützten Bereich 4, der von einem baulichen Raumschutz 6 umgeben ist. Innerhalb dieses geschützten sicheren Bereichs erfolgt auch die Verwaltung der Schlüssel mittels der Einrichtung 20, die über eine ausschließliche Schnittstelle 21 mit dem Kryptoalgorithmus-Rechner 5 verbunden ist.

Da die Sicherheit des Verfahrens der digitalen Unterschrift in hohem Maße davon abhängt, daß der private Schlüssel geschützt ist, d. h. in keinem Fall nach außen dringt, ist es sicherer, den privaten Schlüssel dort zu verwahren wo er auch erzeugt wird, d. h. im zentralen Server. Nach dem Erstellen des Zertifikats 10 wird dies in einem ersten Hinterlegungsspeicher 11 sowie in einem zweiten Hinterlegungsspeicher 12 abgespeichert. Dabei befindet sich dieser zweite Hinterlegungsspeicher 12 in einem vom sicheren Bereich 4 des zentralen Servers 2 getrennten sicheren Bereich. Dadurch ist ein Schutz der hinterlegten Daten vor kleineren Katastrophen gegeben. Aus Sicherheitsgründen handelt es sich bei den Zertifikat Hinterlegungsspeicher aus nur einmal beschreibbaren, ohne Zerstörung nicht veränderbaren Medien.

Durch die Dopplung der Zertifikatshinterlegung ist es weiterhin möglich, die Hinterlegungen von unterschiedlichen Körperschaften langfristig und sich gegensteitig kontrolierbar verwalten zu lassen, so daß eine große Sicherheit gegen unerlaubte Einflußnahme und Manipulation gegeben ist.

Diese zentrale Zertifikatshinterlegung dient als Nachweis für eine willentlich (eigenhändig) veranlaßte, digitale Unterschrift. Durch eine Speicherarchitektur mit lückenloser, zeitlich aufeinanderfolgender Aufzeichnung der Zertifikate von verschiedenen Teilnehmern ist dieser Nachweis notfalls auch vor Gericht zu führen. Der geschützte Zertifikatsspeicher 11 bzw. 12 funktioniert wie ein unabhängiger Dritter (funktionallität eines Notars mit dem Unterschied, daß im Notariat der vollständige Inhalt eines Dokumentes "offen" liegt). Diese Zertifikatshinterlegung dient als Voraussetzung für die juristische Anerkennung digitaler Unterschriften.

Der Benutzer der sendenden Kommunikationsendstelle bestimmt bei dem erfindungsgemäßen Verfahren die Adressen der Empfänger, welche jederzeit das Zertifikat nachfordern dürfen. Diese Angabe ist Bestandteil des Zertifikats. Weitere Personen müssen sich aus Gründen des Datenschutzes zum Nach fordern des Zertifikates an den Unterzeichner wenden. Der Zugang der Empfänger zum "Zertifikat nachfordern" wird vom zentralen Server 2 kontrolliert. Dieser Zugriff wird vom zentralen Server erst nach Vergleich mit den Angaben im Zertifikat freigegeben.

## Patentansprüche

1. Verfahren zum eindeutigen Zuordnen von zwischen einer ersten und einer zweiten Kommunikationsendstelle übertragenen Nutzdaten zu einem bestimmten Absender, bei dem zusätzlich zu den Nutzdaten ein Hash-Ergebnis gebildet wird, welches einem Kryptoalgorithmus unterworfen wird, bei dem die Nutzdaten in der sendenden Kommunikationsstelle (15) mittels eines Hash-Verfahrens (16) komprimiert werden und anschließend an einen zentralen Server (2) übermittelt werden, bei dem nach erfolgter Authentifizierung des Benutzers das Hash-Ergebnis (3) zusammen mit dem privaten Schlüssel (9a) des Benutzers mittels eines Kryptoalgorithmus zu einer Signatur (17) verarbeitet wird, bei dem die Nutzdaten im Klartext zusammen mit der Signatur (17) und dem öffentlichen Schlüssel (9b) zu einer zweiten Kommunikationsendstelle (19) übertragen werden, und bei dem in der zweiten Kommunikationsendstelle (19) die im Klartext empfangenen Nutzdaten (1) einem Hash-Verfahren und die Signatur (17) einem zweiten gegenüber dem ersten inversen Kryptoalgorithmus unterworfen werden, wobei bei Übereinstimmung der beiden Resultate auf eine gültige Zuordnung der Nutzdaten zu einem bestimmten Benutzer erkannt wird,
**dadurch gekennzeichnet**,
daß die Benutzer-Authentifizierung mittels eines dem Kryptoalgorithmus-Rechners vorgeschalteten im Übertragungsweg liegenden Vorrechners (7) in Verbindung mit einer elektronischen Filtereinrichtung (8) erfolgt, wobei der Vorrechner über eine separate Steuerleitung (5a) mit dem Kryptoalgorithmus-Rechner (5) verbunden ist.

2. Verfahren nach Anspruch 1,
**dadurch gekennzeichnet,**
daß die Signatur (17) im zentralen Server (2) hinterlegt wird und zusammen mit dem öffentlichen Schlüssel (9b) des Benutzers gleichzeitig zur Überprüfung an den Benutzer übertragen wird, wobei die Hinterlegung der Signatur (17) im zentralen Server (2) mindestens durch Dopplung des Hinterlegungsspeichers (11, 12) in getrennten Gebäuden (13) erfolgt.

3. Verfahren nach Anspruch 2,
**dadurch gekennzeichnet,**
daß aufgrund der Dopplung der Signaturhinterlegung die Hinterlegung von unterschiedlichen Körperschaften (14) langfristig und gegenseitig kontrolierbar verwaltet wird.

4. Verfahren nach Anspruch 1,
**dadurch gekennzeichnet,**
daß die Hinterlegung sofort nach der Erstellung der Signatur (17) und in chronologischer Reihenfolge erfolgt.

5. Verfahren nach Anspruch 1,
**dadurch gekennzeichnet,**
daß die privaten sowie die öffentlichen Schlüssel (9a, 9b) im gesicherten zentralen Server erzeugt und verwaltet werden, wobei die privaten Schlüssel unauslesbar gespeichert sind und die Verwaltungseinrichtung (20) für die Schlüssel (9a, 9b) eine ausschließliche Schnittstelle (21) zum eigentlichen Kryptoalgorithmus-Rechner (5) benutzt.

## Claims

1. Method for the unambiguous allocation of useful data transmitted between a first and a second communications terminal to a specific originator, in which a hash result, which is subjected to a crypto-algorithm, is formed in addition to the useful data, in which the useful data are compressed in the transmitting communications terminal (15) by means of a hash method (16) and are subsequently communicated to a central server (2), in which, after the user has been authenticated, the hash result (3) is processed together with the private key (9a) of the user by means of a crypto-algorithm to form a signature (17), in which the useful data in plain text together with the signature (17) and the public key (9b) are transmitted to a second communications terminal (19), and in which, in the second communications terminal (19), the useful data (1) received in plain text are subjected to a hash method and the signature (17) is subjected to a second crypto-algorithm which is the inverse of the first crypto-algorithm, a valid allocation of the useful data to a specific user being recognized in the event of coincidence of the two results, characterized in that the user authentication is carried out by means of a satellite computer (7), which is connected upstream of the crypto-algorithm computer and is located in the transmission path, in conjunction with an electronic filter device (8), the satellite computer being connected to the crypto-algorithm computer (5) via a separate control line (5a).

2. Method according to Claim 1, characterized in that the signature (17) is stored in the central server (2) and at the same time is transmitted, together with the public key (9b) of the user, to the user for the purpose of checking, the signature (17) being stored in the central server (2) by at least doubling the storage memory (11, 12) in separate buildings (13).

3. Method according to Claim 2, characterized in that, on account of the doubling of the signature storage, the storage is administered by different corporate entities (14) on a long-term basis and with the possibility of mutual supervision.

4. Method according to Claim 1, characterized in that the storage is carried out immediately after the creation of the signature (17) and in chronological order.

5. Method according to Claim 1, characterized in that the private and the public keys (9a, 9b) are produced and administered in the protected central server, the private keys being stored in a non-readable manner and the administration device (20) for the keys (9a, 9b) using an exclusive interface (21) to the actual crypto-algorithm computer (5).

## Revendications

1. Procédé d'allocation univoque, à un expéditeur déterminé, de données utiles transmises entre une première station terminale de communication et une seconde station terminale de communication, dans lequel on forme en plus des données utiles à un résultat de Hash, qu'on soumet à un algorithme de cryptographie, dans lequel on comprime les données utiles dans la station (15) émettrice de communication au moyen d'un procédé (16) de Hash et on les transmet ensuite à un serveur (2) central, dans lequel, lorsque l'on a authentifié l'utilisateur, on traite le résultat (3) de Hash conjointement avec le code (9a) privé de l'utilisateur au moyen d'un algorithme de cryptographie pour former une signature (17), dans lequel on transmet les données utiles sous forme de textes en clair conjointement avec la signature (17) et le code (9b) public à une seconde station (19) terminale de communication, et dans lequel on soumet, dans la deuxième station (19) terminale de communication les données utiles (1) reçues sous forme de texte en clair à un procédé de Hash et la signature (17) à un algorithme de cryptographie inverse du premier algorithme, une allocation valable des données utiles à un utilisateur déterminé étant identifiée en cas de concordance des deux résultats,
caractérisé en ce que
on effectue l'authentification de l'utilisateur au moyen d'un ordinateur (7) en amont, qui est branché en amont de l'ordinateur mettant en oeuvre l'algorithme de cryptographie et qui se trouve dans le chemin de transmission, en liaison avec un dispositif (8) électronique de filtrage, l'ordinateur en amont étant relié par l'intermédiaire d'une ligne (5a) de commande distincte à l'ordinateur (5) mettant en oeuvre l'algorithme de cryptographie.

2. Procédé suivant la revendication 1, caractérisé en ce que l'on enregistre la signature (17) dans le serveur central (2) et on la transmet conjointement avec le code (9b) public de l'utilisateur en même temps pour la vérification à l'utilisateur, l'enregistrement de la signature (17) dans le serveur central (2) s'effectuant au moins par duplication de la mémoire (11, 12) d'enregistrement dans des bâtiments (13) distincts.

3. Procédé suivant la revendication 2, caractérisé en ce que l'on gère à long terme et avec possibilité de contrôle réciproque l'enregistrement d'entités (14) différentes sur la base de la duplication de l'enregistrement de la signature.

4. Procédé suivant la revendication 1, caractérisé en ce que l'enregistrement s'effectue immédiatement après avoir produit la signature (17) et dans l'ordre chronologique.

5. Procédé suivant la revendication 1, caractérisé en ce que l'on produit et l'on gère les codes (9a, 9b) privés ainsi que les codes publics dans le serveur central protégé, les codes privés étant mémorisés sans possibilité d'être extraits et le dispositif (20) de gestion pour les codes (9a, 9b) utilisant une interface (21) exclusive vers le calculateur (5) proprement dit mettant en oeuvre l'algorithme de cryptographie.
